# EUROPÄISCHE PATENTSCHRIFT

(11) **EP 3 373 362 B1**
(45) Veröffentlichungstag und Bekanntmachung des Hinweises auf die Patenterteilung: **18.09.2024**
(21) Anmeldenummer: 18159951.5
(22) Anmeldetag: 05.03.2018
(51) Int. Cl.: H02B 1/28, A62C 3/16, B60L 58/24, H01M 50/24, H01M 50/383, H01M 50/262, H01M 50/271

(54) **GEHÄUSEANORDNUNG MIT MINDESTENS EINER ÜBERHITZUNGSGEFÄHRDETEN ELEKTRISCHEN EINHEIT**
HOUSING ARRANGEMENT WITH AT LEAST ONE ELECTRICAL UNIT VULNERABLE TO OVERHEATING
DISPOSITIF DE BOÎTIER POURVU D'AU MOINS UNE UNITÉ ÉLECTRIQUE PRÉSENTANT UN DANGER DE SURCHAUFFE

(30) Priorität: 06.03.2017 DE 102017104644
(43) Veröffentlichungstag der Anmeldung: 12.09.2018
(73) Patentinhaber: ALSTOM Holdings, 93400 Saint-Ouen-sur-Seine (FR)
(72) Erfinder: Schulz, Stefan, 16761 Henningsdorf (DE); Wichmann, Tolga, 13187 Berlin (DE)
(74) Vertreter: Zimmermann & Partner Patentanwälte mbB

(56) Entgegenhaltungen:
- EP-A1- 2 501 001
- CA-A1- 2 836 369
- DE-U1- 29 509 361
- JP-B2- 5 554 152
- US-A- 2 743 035
- US-A1- 2002 182 480

## Beschreibung

Die Erfindung betrifft eine Gehäuseanordnung mit mindestens einer überhitzungsgefährdeten elektrischen Einheit, ein Verfahren zum Schützen mindestens einer Umgebung mindestens einer Gehäuseanordnung und ein Schienenfahrzeug mit mindestens einer Gehäuseanordnung.

Im Bereich der Schienenfahrzeugtechnik ist es bekannt, dass mindestens eine Batterie elektrische Geräte in mindestens einem Schienenfahrzeugwagen mit Energie versorgen kann. Die Batterie kann bekanntermaßen frei in einem Batteriekasten angeordnet sein. Diese Anordnung erfüllt jedoch nicht mehr die aktuellen Anforderungen an einen Brandschutz. Außerdem ist bekannt, dass die Batterie in einem offenen Batterietrog angeordnet sein kann, der wiederum in einem Batteriekasten angeordnet ist. Der Batteriekasten muss dabei belüftungstechnischen und brandschutztechnischen Normen entsprechen.

Die Druckschrift WO 01/20961 A1 beschreibt einen Schaltschrank mit einem Verschlussmechanismus, der zwei an einander anliegende gelochte Platten und einen Federmechanismus umfasst. Die Lochungen der beiden Platten liegen übereinander, so dass ein Luftaustausch möglich ist. Wenn die Temperatur am Verschlussmechanismus eine vorgegebene Temperatur überschreitet, werden die Platten gegeneinander verschoben, so dass Lochungen einer ersten Platte an ungelochte Bereiche einer zweiten Platte angrenzen. Dadurch werden Flammen an einem Austritt aus dem Schaltschrank gehindert. Nachteilig ist hierbei, dass bei geschlossenem Verschlussmechanismus auch ein Durchtreten von Gasen verhindert wird. Außerdem ist der Verschlussmechanismus störungsanfällig.

Die Druckschrift EP 2 910 284 A2 betrifft ein Explosionsschutzventil für belüftete Schutzräume. Das Explosionsschutzventil umfasst zwei U-förmig gebogene und gelochte Abdeckungen und eine Feder. Bei einer Druckwelle wird eine äußere Abdeckung gegen eine innere Abdeckung gepresst, so dass Lochungen der äußeren Abdeckung an ungelochte Bereiche der zweiten Abdeckung angrenzen. Dadurch wird das Explosionsschutzventil verschlossen und bildet einen Flammenschutz. Nachteilig ist hier, dass das Explosionsschutzventil nur bei einer Explosion reagiert und bei einer explosionsfreien Flammenbildung in einer Ruhestellung verbleibt.

Die Druckschrift US 3,955,949 offenbart eine Filtervorrichtung für ein Dunstabzugssystem einer Küche, wobei der Dunst Fettpartikel o.Ä. enthält. Die Filtervorrichtung hält Flammen zurück und ist für Hitze und Dünste durchlässig. Langgestreckte Prallbleche mit abgewinkelten Rändern sind parallel und versetzt zu einander angeordnet. Ein Nachteil besteht darin, dass eine räumlich offene Flammenbildung stattfindet, wobei lediglich das Dunstabzugssystem geschützt wird.

Aus JP 5 554152 B2 ist ein Schaltgehäuse mit einem Ansaugteil zum Ansaugen von Luft in einen Innenraum, in dem eine elektrische Vorrichtung aufgenommen ist, bekannt. Das Ansaugteil weist zwei parallele Platten mit einer Vielzahl von Durchgangsöffnungen auf.

Ein Gehäuse zur Aufnahme einer elektrischen Einrichtung umfassend eine Plattenvorrichtung mit einer Vielzahl von versetzten Öffnungen ist in der CA 2 836 369 A1 offenbart. Die Plattenvorrichtung dient dazu, bei einer Bogenentladung in der elektrischen Einrichtung die dabei entstehenden Plasmagas kontrolliert ausströmen zu lassen.

Gehäuse mit Schutzeinrichtungen sind weiterhin in US 2002/0182480 A1, DE 295 09 361 U1 und US 2 743 035 A beschrieben.

Der Erfindung liegt daher die Aufgabe zu Grunde, eine Gehäuseanordnung zu schaffen, die sowohl belüftungstechnischen als auch brandschutztechnischen Anforderungen entspricht und zuverlässig ist.

Diese Aufgabe wird erfindungsgemäß mit einer Gehäuseanordnung mit mindestens einer überhitzungsgefährdeten elektrischen Einheit nach Anspruch 1 gelöst. Weiterhin wird die Aufgabe mit einem Verfahren zum Schützen mindestens einer Umgebung mindestens einer Gehäuseanordnung nach Anspruch 12 sowie mit einem Schienenfahrzeug nach Anspruch 13 gelöst. Vorteilhafte Ausgestaltungen der Erfindung sind in den Unteransprüchen enthalten.

Erfindungsgemäß besteht die Lösung der Aufgabe in einer Gehäuseanordnung mit mindestens einer überhitzungsgefährdeten elektrischen Einheit, wobei die Gehäuseanordnung mindestens eine Aufnahmevorrichtung, in der die elektrische Einheit aufgenommen ist, und mindestens eine Abdeckungsvorrichtung umfasst und wobei die Abdeckungsvorrichtung die Aufnahmevorrichtung an mindestens einer zugehörigen offenen Seite abdeckt und mindestens eine erste Deckplatte und mindestens eine zweite Deckplatte umfasst, wobei die erste Deckplatte parallel zu der zweiten Deckplatte angeordnet ist und die erste Deckplatte rechteckig ist und erste Öffnungen aufweist und die zweite Deckplatte rechteckig ist und zweite Öffnungen aufweist. Die erste Deckplatte und die zweite Deckplatte sind voneinander beabstandet und die ersten Öffnungen in der ersten Deckplatte sind unabhängig von einem thermischen Zustand der elektrischen Einheit jeweils versetzt zu den zweiten Öffnungen der zweiten Deckplatte angeordnet. Die erste Deckplatte weist eine Vielzahl von kreisförmigen ersten Öffnungen auf und die zweite Deckplatte weist eine Vielzahl von kreisförmigen zweiten Öffnungen auf, wobei die ersten Öffnungen und/oder die zweiten Öffnungen jeweils unterschiedliche Durchmesser aufweisen.

Ein Vorteil der erfindungsgemäßen Gehäuseanordnung besteht darin, dass Anforderungen an eine Belüftung und einen Brandschutz gleichermaßen erfüllt werden. Der Brandschutz ist erforderlich, da an elektrischen Einheiten ein Brand bzw. eine flammenbildende oder flammenbildungsfreie Überhitzung entstehen kann. Die elektrische Einheit kann z.B. eine Batterieeinheit, insbesondere eine Batterieeinheit eines Schienenfahrzeugs sein. Andersartige überhitzungsgefährdete, d.h. entflammbare, brennbare, brandgefährdete und/oder entzündliche elektrische Einheiten oder flammenbildungsfreie, rauchbildende elektrische Einheiten sind ebenfalls denkbar. Die Gehäuseanordnung bildet einen Feuerschutzabschluss und kompensiert ein Brandrisiko, das von der elektrischen Einheit ausgeht, d.h. der Brand bricht nicht aus dem Gehäuse aus. Bei einem Brand entstehende Flammen bleiben innerhalb der Gehäuseanordnung.

Eine Belüftung ist erforderlich, damit Wärme, Rauchgase und/oder bei einem Ladevorgang einer Batterieeinheit entstehende Gase abgeführt werden können. Bei einem begrenzten Einbauraum, z.B. bei einem Schienenfahrzeug, entfällt ein separater äußerer Kasten für die Batterieeinheit, dessen Funktion von der Gehäuseanordnung übernommen wird. Die Aufnahmevorrichtung kann eine Form eines Trogs aufweisen. Ein weiterer Vorteil liegt darin, dass der Aufbau der Gehäuseanordnung einfach ist und einen geringen Fertigungsaufwand erfordert. Außerdem ist der Aufbau zuverlässig, denn es kann auf einen störungsanfälligen Verstellmechanismus verzichtet werden.

Gemäß einer vorteilhaften Ausgestaltung der Erfindung ist unabhängig von einem Zustand der elektrischen Einheit ein Spalt zwischen der ersten Deckplatte und der zweiten Deckplatte vorhanden und weist vorzugsweise eine Spaltbreite zwischen 8 mm und 12 mm einschließlich eines Toleranzbereichs auf, wobei die Spaltbreite insbesondere 10 mm einschließlich eines Toleranzbereichs beträgt. Zur Gewährleistung einer ausreichenden Belüftung ist ein Minimalabstand erforderlich. Aus Gründen des Brandschutzes ist außerdem ein Maximalabstand einzuhalten, denn mit einem zunehmenden Abstand nimmt eine brandschutztechnische Wirkung ab. Eine Spaltbreite zwischen 8 mm und 12 mm einschließlich eines Toleranzbereichs, insbesondere 10 mm einschließlich eines Toleranzbereichs, ist besonders vorteilhaft, wenn die elektrische Einheit eine Batterieeinheit eines Schienenfahrzeugs ist.

In einer bevorzugten Weiterbildung der Erfindung beträgt eine Gesamtfläche der ersten Öffnungen und der zweiten Öffnungen zusammen zwischen 200 cm² und 230 cm² einschließlich eines Toleranzbereichs. Die Begrenzung der Gesamtfläche ist wegen der Anforderungen an die Belüftung und den Brandschutz erforderlich. Die Gesamtfläche zwischen 200cm² und 230cm² ist besonders vorteilhaft, wenn die elektrische Einheit eine Batterieeinheit eines Schienenfahrzeugs ist.

Insbesondere können die ersten Öffnungen oder die zweiten Öffnungen jeweils gleiche Durchmesser aufweisen. Dadurch können z.B. in Bereichen einer erhöhten Brandgefahr an der elektrischen Einheit kleinere Durchmesser gewählt werden als in weniger gefährdeten Bereichen.

Bevorzugt weisen die ersten Öffnungen und die zweiten Öffnungen jeweils einen Durchmesser auf, der weniger als 25 mm beträgt, wobei der Durchmesser insbesondere 20 mm einschließlich eines Toleranzbereichs beträgt. Derart gewählte Durchmesser sind besonders vorteilhaft, wenn die elektrische Einheit eine Batterieeinheit eines Schienenfahrzeugs ist.

In einer zweckmäßigen Weiterbildung der Erfindung sind zwischen den ersten Öffnungen und den zweiten Öffnungen Versatzabstände in einer Längsrichtung und/oder einer Querrichtung vorhanden. Dadurch kann eine Richtung einer Gasausströmung beeinflusst werden.

Weiterhin können die Versatzabstände zwischen den ersten Öffnungen und den zweiten Öffnungen jeweils gleich groß oder jeweils unterschiedlich groß sein. Bei gleich großen Versatzabständen ist eine gleichmäßige Belüftung gewährleistet. Bei unterschiedlich großen Versatzabständen kann z.B. in stärker brandgefährdeten Bereichen an der elektrischen Einheit ein größerer Versatzabstand vorgesehen sein als in weniger brandgefährdeten Bereichen.

Insbesondere sind die Versatzabstände zwischen den ersten Öffnungen und den zweiten Öffnungen jeweils größer als 25 mm. Hierbei wird ein Prüfkriterium für die Belüftung und den Brandschutz bei einer Batterieeinheit eines Schienenfahrzeugs erfüllt, d.h. eine Spaltlehre mit einem Außendurchmesser von 25 mm passt weder senkrecht noch schräg durch die versetzt zu einander angeordneten ersten Öffnungen und zweiten Öffnungen. Die Spaltlehre ist ein zylindrischer Stahlstab, der brandschutztechnischen Normen entspricht, und zu einer Überprüfung einer Einhaltung der Normen dient.

Außerdem können zwischen den ersten Öffnungen und Rändern der ersten Deckplatte sowie zwischen den zweiten Öffnungen und Rändern der zweiten Deckplatte jeweils Randabstände vorhanden sein, wobei jeder Randabstand größer ist als ein jeweils vorgegebener Mindestabstand. Dadurch werden mechanische Anforderungen, d.h. Anforderungen an eine statische und dynamische Strukturfestigkeit, sowie fertigungstechnische Anforderungen erfüllt.

Speziell kann die erste Deckplatte und die zweite Deckplatte jeweils ein Material mit einem vorgegebenen Feuerwiderstand aufweisen, insbesondere mit einem Feuerwiderstand von 10 Minuten, wobei das Material insbesondere Stahl umfasst. Der vorgegebene Feuerwiderstand ergibt sich aus den brandschutztechnischen Anforderungen. Ein Feuerwiderstand von 10 Minuten ist besonders vorteilhaft, wenn die elektrische Einheit eine Batterieeinheit eines Schienenfahrzeugs ist. Stahl bietet im Allgemeinen einen guten Feuerwiderstand. Vorzugsweise betragen eine erste Dicke der ersten Deckplatte und eine zweite Dicke der zweiten Deckplatte jeweils mindestens 1 mm einschließlich eines Toleranzbereichs. Eine derart bemessene erste Dicke bzw. zweite Dicke ist besonders vorteilhaft, wenn die elektrische Einheit eine Batterieeinheit eines Schienenfahrzeugs ist.

In einer vorteilhaften Weiterbildung der Erfindung ist die elektrische Einheit eine Batterieeinheit und/oder die erste Deckplatte und die zweite Deckplatte sind an einander befestigt, insbesondere mittels Nietverbindungen, und/oder die Abdeckungsvorrichtung ist an der Aufnahmevorrichtung befestigt, insbesondere mittels Schraubenverbindungen. Ein derartiger Aufbau ermöglicht eine einfache Montage bzw. Demontage. Wenn die Aufnahmevorrichtung für eine Batterieeinheit eines Schienenfahrzeugs vorgesehen ist, ist dieser Aufbau besonders vorteilhaft.

Weiterhin besteht die Lösung der Aufgabe in einem Verfahren zum Schützen mindestens einer Umgebung mindestens einer Gehäuseanordnung. Bei einer Flammenentwicklung an der elektrischen Einheit bilden die erste Deckplatte und die zweite Deckplatte gemeinsam eine gasdurchlässige Flammensperre, wobei die erste Deckplatte und die zweite Deckplatte bei einer Flammenentwicklung an der elektrischen Einheit jeweils eine gleiche gasdurchlässige Position einnehmen wie bei einem flammenfreien Betrieb der elektrischen Einheit. Eine Gasdurchlässigkeit ist also sowohl bei einer Flammenbildung als auch bei einem flammenfreien Betrieb gewährleistet. Bei dem erfindungsgemäßen Verfahren werden somit vorteilhaft die Anforderungen an die Belüftung und den Brandschutz erfüllt. Dadurch ist ein sicherer Betrieb möglich, denn es kann auf einen störungsanfälligen Verstellmechanismus verzichtet werden.

Erfindungsgemäß kann bei einer Gasentwicklung an der elektrischen Einheit unabhängig von einem Auftreten von Flammen eine Gasströmung durch die zweiten Öffnungen, den Spalt zwischen der zweiten Deckplatte und der ersten Deckplatte und durch die ersten Öffnungen ausströmen. Auf diese Weise werden die Belüftungsanforderungen erfüllt, wobei die Gasströmung durch einen einfach aufgebauten Strömungsweg ausströmen kann.

Beansprucht wird weiterhin ein Schienenfahrzeug mit mindestens einer Gehäuseanordnung.

Im Folgenden wird ein Ausführungsbeispiel der Erfindung anhand von fünf Figuren näher erläutert. Es zeigen:
- Fig. 1: eine perspektivische Ansicht einer erfindungsgemäßen Gehäuseanordnung,
- Fig. 2: eine perspektivische Ansicht einer ersten Deckplatte der Gehäuseanordnung in Einbaulage,
- Fig. 3: eine perspektivische Ansicht der ersten Deckplatte und einer zweiten Deckplatte der Gehäuseanordnung in einer gegenüber Fig. 2 um 180° gedrehten Lage,
- Fig. 4: eine Seitenansicht der ersten Deckplatte und der zweiten Deckplatte in Einbaulage und
- Fig. 5: eine Draufsicht auf die erste Deckplatte mit angedeuteter zweiter Deckplatte.

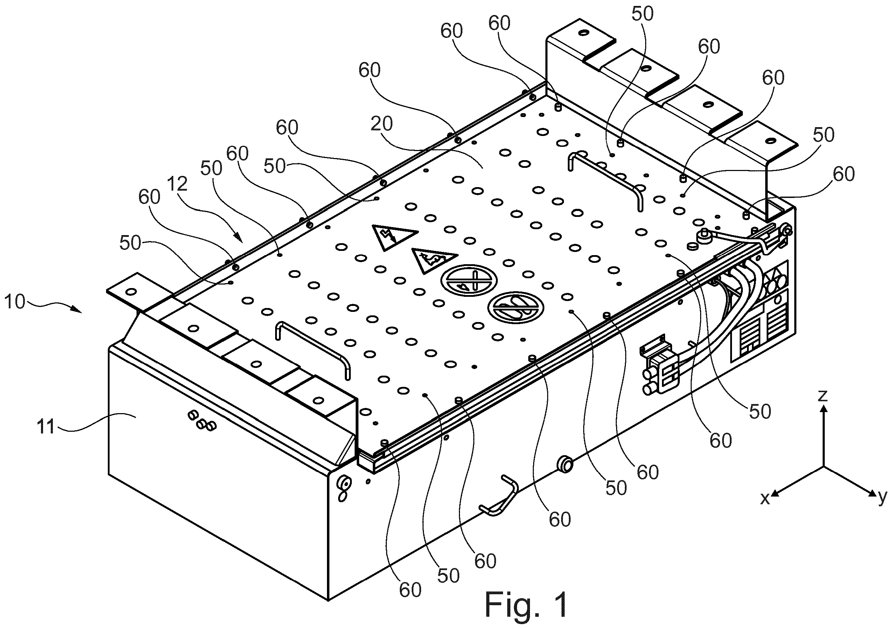

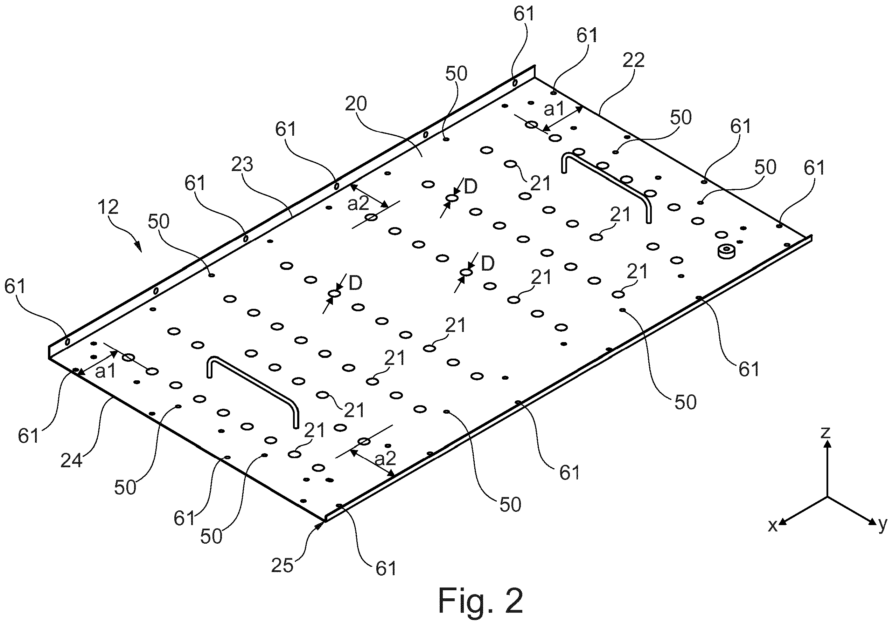

Fig. 1 zeigt eine Gehäuseanordnung 10 mit einer Aufnahmevorrichtung 11 und einer Abdeckungsvorrichtung 12. Die Gehäuseanordnung 10 nimmt in einem von der Aufnahmevorrichtung 11 und der Abdeckungsvorrichtung 12 ausgebildeten nicht dargestellten Innenraum eine nicht dargestellte elektrische Einheit auf. In dem Ausführungsbeispiel ist die Gehäuseanordnung 10 für eine elektrische Einheit vorgesehen, die eine Batterieeinheit eines Schienenfahrzeugs ist. Die Abdeckungsvorrichtung 12 umfasst eine erste Deckplatte 20 und eine in Fig. 1 nicht dargestellte zweite Deckplatte. Die erste Deckplatte 20 ist mittels Schraubenverbindungen 60 an der Aufnahmevorrichtung 11 befestigt. Gemäß den Fig. 2 bis 5 weist die erste Deckplatte 20 Bohrungen 61 für die Schraubenverbindungen 60 auf.

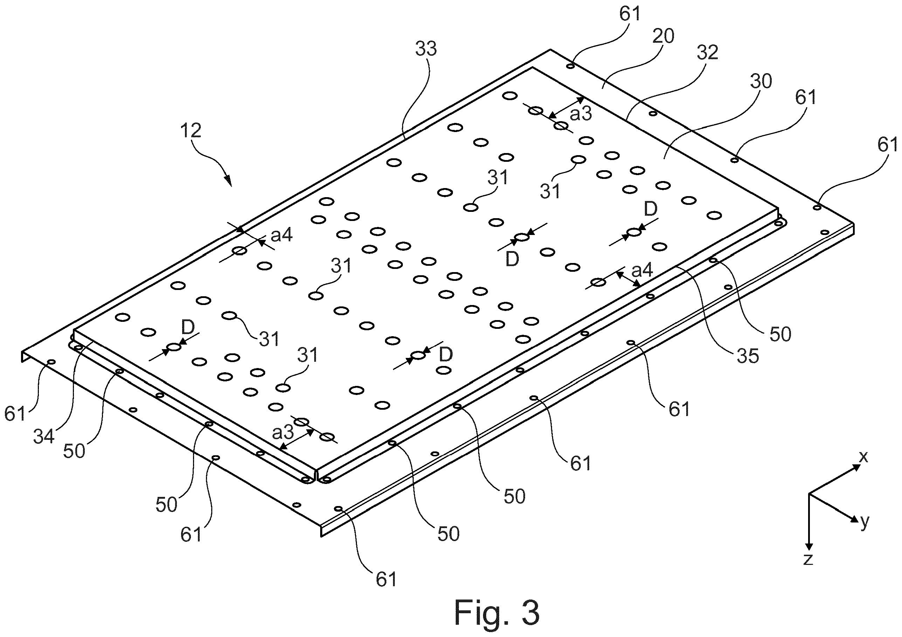

Wie in den Fig. 3 bis 5 dargestellt, ist die zweite Deckplatte 30 in einer senkrechten Richtung z unterhalb der ersten Deckplatte 20 angeordnet. In den Fig. 1 bis 5 sind in vereinfachter Form Nietverbindungen 50 dargestellt, die die zweite Deckplatte 30 und die erste Deckplatte 20 an einander befestigen.

In Fig. 2 ist die erste Deckplatte 20 der Abdeckungsvorrichtung 12 detailliert dargestellt. Die erste Deckplatte 20 ist rechteckig und weist eine Vielzahl von kreisförmigen ersten Öffnungen 21 auf. Jede erste Öffnung 21 weist einen Durchmesser D auf. Der Durchmesser D kann bei allen ersten Öffnungen 21 gleich groß sein. Erfindungsgemäß können die ersten Öffnungen 21 auch unterschiedlich große Durchmesser aufweisen.

Die erste Deckplatte 20 weist Ränder 22, 23, 24 und 25 auf. Die Ränder 22 und 24 liegen einander in einer Längsrichtung x gegenüber. Die Ränder 23 und 25 liegen einander in einer Querrichtung y gegenüber. Zwischen randnahen Öffnungen 21 und den Rändern 22 und 24 befindet sich jeweils ein Randabstand a1. Der Randabstand a1 ist an den Rändern 22 und 24 jeweils gleich groß. Es können jedoch auch unterschiedlich große Randabstände an den Rändern 22 und 24 gewählt werden. Zwischen randnahen ersten Öffnungen 21 und den Rändern 23 und 25 befindet sich jeweils ein Randabstand a2. Der Randabstand a2 ist an den Rändern 23 und 25 jeweils gleich groß. Es können jedoch auch unterschiedlich große Randabstände an den Rändern 23 und 25 gewählt werden.

In Fig. 3 ist die zweite Deckplatte 30 der Abdeckungsvorrichtung 12 detailliert dargestellt, wobei die Abdeckungsvorrichtung 12 in einer gegenüber der Fig. 2 um 180° gedrehten Lage dargestellt ist. Die zweite Deckplatte 30 ist rechteckig weist eine Vielzahl von kreisförmigen zweiten Öffnungen 31 auf. Jede zweite Öffnung 31 weist einen Durchmesser D auf. Der Durchmesser D kann bei allen zweiten Öffnungen 31 gleich groß sein. Erfindungsgemäß können die zweiten Öffnungen 31 auch unterschiedlich große Durchmesser aufweisen. Die Durchmesser D der ersten Öffnungen 21 (vgl. Fig. 2) und der zweiten Öffnungen 31 sind unterschiedlich groß. Es können jedoch auch unterschiedliche Durchmesser für die ersten Öffnungen 21 oder die zweiten Öffnungen 31 gewählt werden.

Die zweite Deckplatte 30 weist Ränder 32, 33, 34 und 35 auf. Die Ränder 32 und 34 liegen einander in einer Längsrichtung x gegenüber. Die Ränder 33 und 35 liegen einander in einer Querrichtung y gegenüber. Zwischen randnahen zweiten Öffnungen 31 und den Rändern 32 und 34 befindet sich jeweils ein Randabstand a3. Der Randabstand a3 ist an den Rändern 32 und 34 jeweils gleich groß. Es können jedoch auch unterschiedlich große Randabstände an den Rändern 32 und 34 gewählt werden. Zwischen randnahen zweiten Öffnungen 31 und den Rändern 33 und 35 befindet sich jeweils ein Randabstand a4. Der Randabstand a4 ist an den Rändern 33 und 35 jeweils gleich groß. Es können jedoch auch unterschiedlich große Randabstände an den Rändern 33 und 35 gewählt werden.

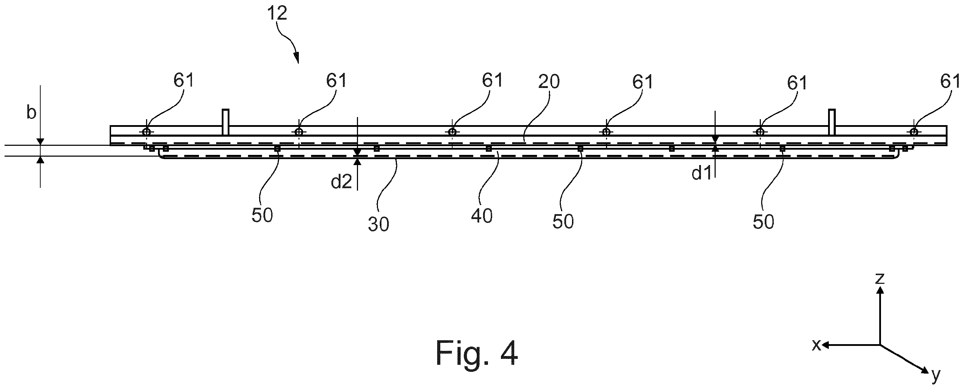

In Fig. 4 ist die Abdeckungsvorrichtung 12 von einer Seite entlang der Längsrichtung x zu sehen. Die erste Deckplatte 20 und die zweite Deckplatte 30 sind parallel zu einander angeordnet. Die erste Deckplatte 20 weist in der senkrechten Richtung z eine erste Dicke d1 auf. Die zweite Deckplatte 30 weist in der senkrechten Richtung z eine zweite Dicke d2 auf. Zwischen der ersten Deckplatte 20 und der zweiten Deckplatte 30 befindet sich ein Spalt 40 mit einer konstanten Spaltbreite b in der senkrechten Richtung z.

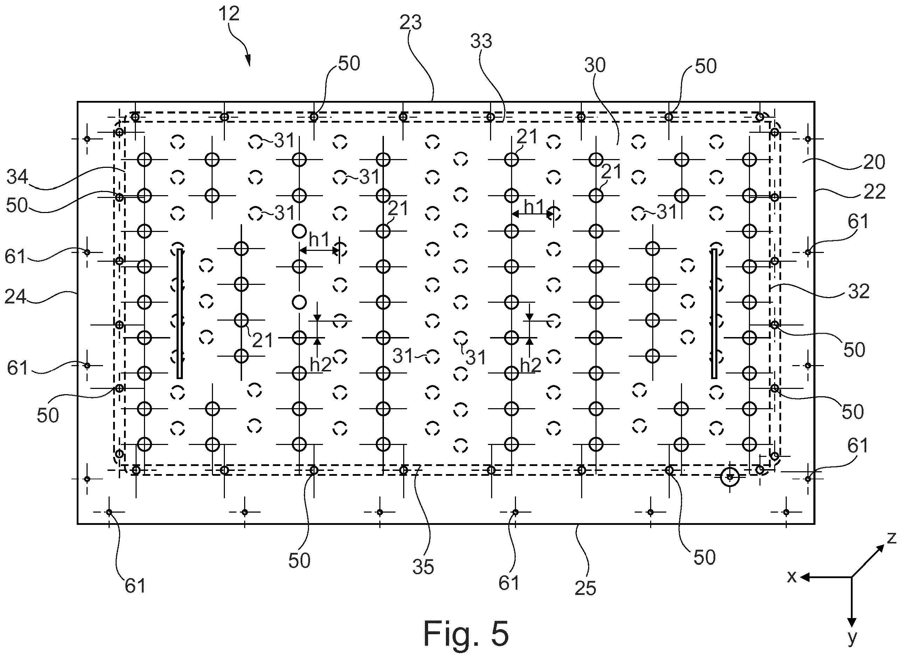

Fig. 5 ist eine Draufsicht auf die Abdeckungsvorrichtung 12, wobei die unterhalb der ersten Deckplatte 20 angeordnete zweite Deckplatte 30 mit gestrichelten Linien dargestellt ist. Die erste Deckplatte 20 weist Ränder 22, 23, 24 und 25 auf (vgl. Fig. 2). Die zweite Deckplatte 30 weist Ränder 32, 33, 34 und 35 auf (vgl. Fig. 3). Die zweiten Öffnungen 31 sind jeweils versetzt gegenüber den ersten Öffnungen 21 angeordnet. In der Längsrichtung x sind die zweiten Öffnungen 31 und die ersten Öffnungen 21 jeweils in einem Versatzabstand h1 zu einander angeordnet. In der Querrichtung y sind die zweiten Öffnungen 31 und die ersten Öffnungen 21 jeweils in einem Versatzabstand h2 zu einander angeordnet.

Im Betrieb können verschiedene Zustände der Batterieeinheit des Schienenfahrzeugs auftreten. Bei einem Ladevorgang der Batterieeinheit können Gase entstehen. Wenn die Batterieeinheit eine Blei- bzw. NiCad-Batterieeinheit ist, können bei einer Überhitzung Rauchgase ohne eine Flammenbildung entstehen. Wenn die Batterieeinheit eine Lithium-Ionen-Batterieeinheit ist, kann bei einer Überhitzung eine Flammenbildung auftreten. Die Erfindung und das Ausführungsbeispiel beziehen sich in erster Linie auf Lithium-Ionen-Batterieeinheiten, können aber auch bei Blei- bzw. NiCad-Batterieeinheiten eingesetzt werden. Somit kann die Gehäuseanordnung 10 bei einem Wechsel eines Typs einer Batterieeinheit beibehalten werden.

Bei dem Ladevorgang können die Gase durch die zweiten Öffnungen 31, den Spalt 40 und die ersten Öffnungen 21 ausströmen. Auch Rauchgase können durch die zweiten Öffnungen 31, den Spalt 40 und die ersten Öffnungen 21 ausströmen. Bei einem Auftreten von Flammen an der Batterieeinheit werden diese mittels der Abdeckungsvorrichtung 12 an einem Austritt aus der Gehäuseanordnung 10 gehindert. Die Abdeckungsvorrichtung 12 besitzt dabei eine Prallwirkung, d.h. die Flammen prallen an der Abdeckungsvorrichtung 12 ab. Die Prallwirkung wird dadurch erzielt, dass die Flammen zunächst zwischen den zweiten Öffnungen 31 auf die zweite Deckplatte 30 prallen. Ein Teil der Flammen tritt durch die zweiten Öffnungen 31 hindurch und prallt zwischen den ersten Öffnungen 21 auf die erste Deckplatte 20. Die zweite Deckplatte 30 und die erste Deckplatte 20 bilden also gemeinsam eine Flammensperre.

Eine Blei- bzw. NiCad-Batterieeinheit kühlt von selbst ab, und eine Rauchbildung verringert sich, wenn eine Initialenergie, d.h. eine die Überhitzung auslösende Energie, entfernt wird. Bei einer Lithium-Ionen-Batterieeinheit können die Flammen nicht aktiv gelöscht werden. Wenn das gesamte Lithium oxidiert ist, verlöschen die Flammen von selbst. Die dabei entstehenden Gase können durch die Abdeckungsvorrichtung 12 ausströmen und damit ein schnelleres Verlöschen der Flammen bewirken. Sowohl bei einer Blei- bzw. NiCad-Batterieeinheit als auch bei einer Lithium-Ionen-Batterieeinheit sorgt das Ausströmen von Gas für ein besseres Abkühlen der Batterieeinheit nach einem Ende der Überhitzung bzw. Flammenbildung.

Alternativ zu der Batterieeinheit des Schienenfahrzeugs können auch andere Arten von überhitzungsgefährdeten elektrischen Einheiten verwendet werden.

### Bezugszeichenliste

- 10: Gehäuseanordnung
- 11: Aufnahmevorrichtung
- 12: Abdeckungsvorrichtung
- 20: Erste Deckplatte
- 21: Erste Öffnung
- 22: Rand
- 23: Rand
- 24: Rand
- 25: Rand
- 30: Zweite Deckplatte
- 31: Zweite Öffnung
- 32: Rand
- 33: Rand
- 34: Rand
- 35: Rand
- 40: Spalt
- 50: Nietverbindung
- 60: Schraubenverbindung
- 61: Bohrungen
- D: Durchmesser
- a1: Randabstand
- a2: Randabstand
- a3: Randabstand
- a4: Randabstand
- d1: Erste Dicke
- d2: Zweite Dicke
- b: Spaltbreite
- h1: Versatzabstand
- h2: Versatzabstand
- x: Längsrichtung
- y: Querrichtung
- z: Senkrechte Richtung

## Patentansprüche

1. Gehäuseanordnung (10) mit mindestens einer überhitzungsgefährdeten elektrischen Einheit,
- wobei die Gehäuseanordnung (10) mindestens eine Aufnahmevorrichtung (11), in der die elektrische Einheit aufgenommen ist, und
- mindestens eine Abdeckungsvorrichtung (12) umfasst und
- wobei die Abdeckungsvorrichtung (12) die Aufnahmevorrichtung (11) an mindestens einer zugehörigen offenen Seite abdeckt und
- mindestens eine erste Deckplatte (20) und mindestens eine zweite Deckplatte (30) umfasst,
- wobei die erste Deckplatte (20) parallel zu der zweiten Deckplatte (30) angeordnet ist und
- die erste Deckplatte (20) rechteckig ist und erste Öffnungen (21) aufweist, und die zweite Deckplatte (30) rechteckig ist und zweite Öffnungen (31) aufweist,
- die erste Deckplatte (20) und die zweite Deckplatte (30) voneinander beabstandet sind und
- die ersten Öffnungen (21) in der ersten Deckplatte (20) unabhängig von einem thermischen Zustand der elektrischen Einheit jeweils versetzt zu den zweiten Öffnungen (31) der zweiten Deckplatte (30) angeordnet sind,
- die erste Deckplatte (20) eine Vielzahl von kreisförmigen ersten Öffnungen (21) aufweist und die zweite Deckplatte (30) eine Vielzahl von kreisförmigen zweiten Öffnungen (31) aufweist,
**dadurch gekennzeichnet, dass**
- die ersten Öffnungen (21) und/oder die zweiten Öffnungen (31) jeweils unterschiedliche Durchmesser aufweisen.

2. Gehäuseanordnung (10) nach Anspruch 1, **dadurch gekennzeichnet, dass** unabhängig von einem Zustand der elektrischen Einheit ein Spalt (40) zwischen der ersten Deckplatte (20) und der zweiten Deckplatte (30) vorhanden ist und vorzugsweise eine Spaltbreite (b) zwischen 8 mm und 12 mm einschließlich eines Toleranzbereichs aufweist, wobei die Spaltbreite (b) insbesondere 10 mm einschließlich eines Toleranzbereichs beträgt.

3. Gehäuseanordnung (10) nach Anspruch 1 oder 2, **dadurch gekennzeichnet, dass** eine Gesamtfläche der ersten Öffnungen (21) und der zweiten Öffnungen (31) zusammen zwischen 200 cm² und 230 cm² einschließlich eines Toleranzbereichs beträgt.

4. Gehäuseanordnung (10) nach einem der Ansprüche 1 bis 3, **dadurch gekennzeichnet, dass** die ersten Öffnungen (21) oder die zweiten Öffnungen (31) jeweils gleiche Durchmesser aufweisen.

5. Gehäuseanordnung (10) nach einem der vorhergehenden Ansprüche, **dadurch gekennzeichnet, dass** zwischen den ersten Öffnungen (21) und den zweiten Öffnungen (31) Versatzabstände (h1, h2) in einer Längsrichtung (x) und/oder einer Querrichtung (y) vorhanden sind.

6. Gehäuseanordnung (10) nach Anspruch 5, **dadurch gekennzeichnet, dass** die Versatzabstände (h1, h2) zwischen den ersten Öffnungen (21) und den zweiten Öffnungen (31) jeweils gleich groß oder jeweils unterschiedlich groß sind.

7. Gehäuseanordnung (10) nach Anspruch 5 oder 6, **dadurch gekennzeichnet, dass** die Versatzabstände (h1, h2) zwischen den ersten Öffnungen (21) und den zweiten Öffnungen (31) jeweils größer als 25 mm sind.

8. Gehäuseanordnung (10) nach einem der vorhergehenden Ansprüche, **dadurch gekennzeichnet, dass** zwischen den ersten Öffnungen (21) und Rändern (22, 23, 24, 25) der ersten Deckplatte (20) sowie zwischen den zweiten Öffnungen (31) und Rändern (32, 33, 34, 35) der zweiten Deckplatte (30) jeweils Randabstände (a1, a2, a3, a4) vorhanden sind, wobei jeder Randabstand (a1, a2, a3, a4) größer ist als ein jeweils vorgegebener Mindestabstand.

9. Gehäuseanordnung (10) nach einem der vorhergehenden Ansprüche, **dadurch gekennzeichnet, dass** die erste Deckplatte (20) und die zweite Deckplatte (30) jeweils ein Material mit einem vorgegebenen Feuerwiderstand aufweisen, insbesondere mit einem Feuerwiderstand von 10 Minuten, wobei das Material insbesondere Stahl umfasst.

10. Gehäuseanordnung (10) nach Anspruch 9, **dadurch gekennzeichnet, dass** eine erste Dicke (d1) der ersten Deckplatte (20) und eine zweite Dicke (d2) der zweiten Deckplatte (30) jeweils mindestens 1 mm einschließlich eines Toleranzbereichs betragen.

11. Gehäuseanordnung (10) nach einem der vorhergehenden Ansprüche, **dadurch gekennzeichnet, dass** die elektrische Einheit eine Batterieeinheit ist und/oder die erste Deckplatte (20) und die zweite Deckplatte (30) an einander befestigt sind, insbesondere mittels Nietverbindungen (50), und/oder die Abdeckungsvorrichtung (12) an der Aufnahmevorrichtung (11) befestigt ist, insbesondere mittels Schraubenverbindungen (60).

12. Verfahren zum Schützen mindestens einer Umgebung mindestens einer Gehäuseanordnung (10) nach einem der Ansprüche 1 bis 11, wobei bei einer Flammenentwicklung an der elektrischen Einheit die erste rechteckige Deckplatte (20) und die zweite rechteckige Deckplatte (30), die von der Abdeckungsvorrichtung (12) umfasst sind, gemeinsam eine gasdurchlässige Flammensperre bilden, wobei die erste Deckplatte (20) und die zweite Deckplatte (30) bei einer Flammenentwicklung an der elektrischen Einheit jeweils eine gleiche gasdurchlässige Position einnehmen wie bei einem flammenfreien Betrieb der elektrischen Einheit, wobei bei einer Gasentwicklung an der elektrischen Einheit während einer Flammenentwicklung oder während eines flammenfreien Betriebs eine Gasströmung durch die Vielzahl von kreisförmigen zweiten Öffnungen (31), den Spalt (40) zwischen der zweiten Deckplatte (30) und der ersten Deckplatte (20) und durch die Vielzahl von kreisförmigen ersten Öffnungen (21) ausströmt.

13. Schienenfahrzeug mit mindestens einer Gehäuseanordnung (10) nach einem der Ansprüche 1 bis 11.

## Claims

1. Housing arrangement (10) with at least one electrical unit vulnerable to overheating,
- wherein the housing arrangement (10) has at least one accommodation apparatus (11) in which the electrical unit is accommodated, and
- comprises at least one covering apparatus (12) and
- wherein the covering apparatus (12) covers the accommodation apparatus (11) on at least one associated open side and
- comprises at least one first cover plate (20) and at least one second cover plate (30),
- wherein the first cover plate (20) is arranged parallel to the second cover plate (30) and
- the first cover plate (20) is rectangular and has first openings (21), and the second cover plate (30) is rectangular and has second openings (31),
- the first cover plate (20) and the second cover plate (30) are spaced apart and
- the first openings (21) in the first cover plate (20) are each arranged offset from the second openings (31) in the second cover plate (30), irrespective of a thermal state of the electrical unit,
- the first cover plate (20) has a plurality of circular first openings (21) and the second cover plate (30) has a plurality of circular second openings (31),
**characterized in that**
- the first openings (21) and/or the second openings (31) each have different diameters.

2. Housing arrangement (10) according to claim 1, **characterized in that** a gap (40) is present between the first cover plate (20) and the second cover plate (30) irrespective of a state of the electrical unit and preferably has a gap width (b) of between 8 mm and 12 mm including a tolerance range, the gap width (b) being in particular 10 mm including a tolerance range.

3. Housing arrangement (10) according to claim 1 or 2, **characterized in that** a total area of the first openings (21) and the second openings (31) together is between 200 cm² and 230 cm² including a tolerance range.

4. Housing arrangement (10) according to one of claims 1 to 3, **characterized in that** the first openings (21) or the second openings (31) each have the same diameter.

5. Housing arrangement (10) according to one of the preceding claims, **characterized in that** offset spacings (h1, h2) in a longitudinal direction (x) and/or a transverse direction (y) are present between the first openings (21) and the second openings (31).

6. Housing arrangement (10) according to claim 5, **characterized in that** the offset spacings (h1, h2) between the first openings (21) and the second openings (31) are each the same size or each different in size.

7. Housing arrangement (10) according to claim 5 or 6, **characterized in that** the offset spacings (h1, h2) between the first openings (21) and the second openings (31) are each greater than 25 mm.

8. Housing arrangement (10) according to one of the preceding claims, **characterized in that** edge distances (a1, a2, a3, a4) are present in each case between the first openings (21) and edges (22, 23, 24, 25) of the first cover plate (20) and between the second openings (31) and edges (32, 33, 34, 35) of the second cover plate (30), each edge distance (a1, a2, a3, a4) being greater than a respectively predetermined minimum distance.

9. Housing arrangement (10) according to one of the preceding claims, **characterized in that** the first cover plate (20) and the second cover plate (30) each have a material with a predetermined fire resistance, in particular with a fire resistance of 10 minutes, the material comprising in particular steel.

10. Housing arrangement (10) according to claim 9, **characterized in that** a first thickness (d1) of the first cover plate (20) and a second thickness (d2) of the second cover plate (30) are each at least 1 mm including a tolerance range.

11. Housing arrangement (10) according to one of the preceding claims, **characterized in that** the electrical unit is a battery unit and/or the first cover plate (20) and the second cover plate (30) are fastened to one another, in particular by means of riveted connections (50), and/or the covering apparatus (12) is fastened to the accommodation apparatus (11), in particular by means of screw connections (60).

12. Method for protecting at least one environment of at least one housing arrangement (10) according to one of claims 1 to 11, wherein, when a flame develops on the electrical unit, the first rectangular cover plate (20) and the second rectangular cover plate (30), which are comprised by the covering apparatus (12), together form a gas-permeable flame barrier, wherein, when a flame develops on the electrical unit, the first cover plate (20) and the second cover plate (30) each assume the same gas-permeable position as in a flame-free operation of the electrical unit, wherein
in the event of gas development at the electrical unit during flame development or during flame-free operation, a gas flow flows out through the plurality of circular second openings (31), the gap (40) between the second cover plate (30) and the first cover plate (20) and through the plurality of circular first openings (21).

13. A rail vehicle comprising at least one housing arrangement (10) according to any one of claims 1 to 11.

## Revendications

1. Agencement formant boîtier (10) comportant au moins une unité électrique à risque de surchauffe,
- dans lequel l'agencement formant boîtier (10) comprend au moins un dispositif de logement (11) dans lequel l'unité électrique est logée, et
- au moins un dispositif de couvercle (12) et
- dans lequel le dispositif de couvercle (12) recouvre le dispositif de logement (11) sur au moins un côté ouvert associé et
- comprend au moins une première plaque de couvercle (20) et au moins une deuxième plaque de couvercle (30),
- dans lequel la première plaque de couvercle (20) est disposée parallèlement à la deuxième plaque de couvercle (30) et
- la première plaque de couvercle (20) est rectangulaire et présente des premières ouvertures (21), et la deuxième plaque de couvercle (30) est rectangulaire et présente des deuxièmes ouvertures (31),
- la première plaque de couvercle (20) et la deuxième plaque de couvercle (30) sont espacées l'une de l'autre et
- les premières ouvertures (21) dans la première plaque de couvercle (20) sont disposées de manière à être respectivement décalées par rapport aux deuxièmes ouvertures (31) de la deuxième plaque de couvercle (30), indépendamment d'un état thermique de l'unité électrique,
- la première plaque de couvercle (20) présente une pluralité de premières ouvertures (21) circulaires et la deuxième plaque de couvercle (30) présente une pluralité de deuxièmes ouvertures (31) circulaires,
**caractérisé en ce que**
- les premières ouvertures (21) et/ou les deuxièmes ouvertures (31) présentent respectivement des diamètres différents.

2. Agencement formant boîtier (10) selon la revendication 1, **caractérisé en ce que,** indépendamment d'un état de l'unité électrique, un interstice (40) est présent entre la première plaque de couvercle (20) et la deuxième plaque de couvercle (30) et présente de préférence une largeur d'interstice (b) comprise entre 8 mm et 12 mm, y compris une plage de tolérance, dans lequel la largeur d'interstice (b) est en particulier de 10 mm, y compris une plage de tolérance.

3. Agencement formant boîtier (10) selon la revendication 1 ou 2, **caractérisé en ce qu'**une surface totale des premières ouvertures (21) et des deuxièmes ouvertures (31) ensemble est comprise entre 200 cm² et 230 cm², y compris une plage de tolérance.

4. Agencement formant boîtier (10) selon l'une des revendications 1 à 3, **caractérisé en ce que** les premières ouvertures (21) ou les deuxièmes ouvertures (31) présentent des diamètres respectivement identiques.

5. Agencement formant boîtier (10) selon l'une des revendications précédentes, **caractérisé en ce que** des distances de décalage (h1, h2) dans une direction longitudinale (x) et/ou une direction transversale (y) sont présentes entre les premières ouvertures (21) et les deuxièmes ouvertures (31).

6. Agencement formant boîtier (10) selon la revendication 5, **caractérisé en ce que** les distances de décalage (h1, h2) entre les premières ouvertures (21) et les deuxièmes ouvertures (31) sont respectivement égales ou respectivement différentes.

7. Agencement formant boîtier (10) selon la revendication5 ou 6, **caractérisé en ce que** les distances de décalage (h1, h2) entre les premières ouvertures (21) et les deuxièmes ouvertures (31) sont respectivement supérieures à 25 mm.

8. Agencement formant boîtier (10) selon l'une des revendications précédentes, **caractérisé en ce que** des distances par rapport aux bords (a1, a2, a3, a4) sont respectivement présentes entre les premières ouvertures (21) et des bords (22, 23, 24, 25) de la première plaque de couvercle (20) ainsi qu'entre les deuxièmes ouvertures (31) et des bords (32, 33, 34, 35) de la deuxième plaque de couvercle (30), dans lequel chaque distance par rapport au bord (a1, a2, a3, a4) est supérieure à une distance minimale respectivement prédéfinie.

9. Agencement formant boîtier (10) selon l'une des revendications précédentes, **caractérisé en ce que** la première plaque de couvercle (20) et la deuxième plaque de couvercle (30) présentent respectivement un matériau comportant une résistance au feu prédéfinie, en particulier comportant une résistance au feu de 10 minutes, dans lequel le matériau comprend en particulier de l'acier.

10. Agencement formant boîtier (10) selon la revendication 9, **caractérisé en ce qu'**une première épaisseur (d1) de la première plaque de couvercle (20) et une deuxième épaisseur (d2) de la deuxième plaque de couvercle (30) sont respectivement d'au moins 1 mm, y compris une plage de tolérance.

11. Agencement formant boîtier (10) selon l'une des revendications précédentes, **caractérisé en ce que** l'unité électrique est une unité formant batterie et/ou la première plaque de couvercle (20) et la deuxième plaque de couvercle (30) sont fixées l'une à l'autre, en particulier au moyen de liaisons par rivets (50), et/ou le dispositif de couvercle (12) est fixé au dispositif de logement (11), en particulier au moyen de liaisons par vis (60).

12. Procédé destiné à la protection d'au moins les environs d'au moins un agencement formant boîtier (10) selon l'une des revendications 1 à 11, dans lequel, lors d'un développement de flammes sur l'unité électrique, la première plaque de couvercle (20) rectangulaire et la deuxième plaque de couvercle (30) rectangulaire, lesquelles sont entourées par le dispositif de couvercle (12), forment ensemble un pare-flamme perméable au gaz, dans lequel la première plaque de couvercle (20) et la deuxième plaque de couvercle (30) occupent, lors d'un développement de flammes sur l'unité électrique, respectivement une position perméable au gaz identique à celle qu'elles occupent lors d'un fonctionnement sans flammes de l'unité électrique, dans lequel, lors d'un développement de gaz sur l'unité électrique pendant un développement de flammes ou pendant un fonctionnement sans flammes, un écoulement de gaz s'échappe à travers la pluralité de deuxièmes ouvertures (31) circulaires, l'interstice (40) entre la deuxième plaque de couvercle (30) et la première plaque de couvercle (20) et à travers la pluralité de premières ouvertures (21) circulaires.

13. Véhicule ferroviaire comportant au moins un agencement formant boîtier (10) selon l'une des revendications 1 à 11.
